(19) Europäisches Patentamt
European Patent Office
Office européen des brevets

(11) Veröffentlichungsnummer: **0 209 513**
B1

(12) **EUROPÄISCHE PATENTSCHRIFT**

(45) Veröffentlichungstag der Patentschrift:
17.01.90

(51) Int. Cl.⁴: **G01B 7/02**, G01D 5/20, G01D 5/24

(21) Anmeldenummer: 86890190.1

(22) Anmeldetag: 26.06.86

(54) **Messsysteme für Werkzeugmaschinen.**

(30) Priorität: 10.07.85 AT 2037/85

(43) Veröffentlichungstag der Anmeldung:
21.01.87 Patentblatt 87/4

(45) Bekanntmachung des Hinweises auf die Patenterteilung:
17.01.90 Patentblatt 90/3

(84) Benannte Vertragsstaaten:
BE CH DE FR GB IT LI LU NL SE

(56) Entgegenhaltungen:
DE-A- 2 834 519
FR-A- 2 482 283
FR-A- 2 483 603
US-A- 3 090 934
US-A- 3 376 532
US-A- 4 400 890

(73) Patentinhaber: RSF-Elektronik Gesellschaft m.b.H.,
A-5121 Tarsdorf 93(AT)

(72) Erfinder: Rieder, Heinz, Riedersbach 90,
A-5120 St.Pantaleon(AT)
Erfinder: Schwaiger, Max, A-5120 Ostermiething 298(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz(AT)

**Beschreibung**

Die Erfindung betrifft ein Längenmeßsystem nach dem Oberbegriff des Patentanspruches.

Längenmeßsysteme dieser Art sind aus der FR-A 2 483 603 und der US-A 3 376 532 bekannt. Die US-A 4 400 890 betrifft ein ähnliches Längenmeßsystem, bei dem die Maßstabverkörperung aus über geeignete Abtasteinheiten abtastbaren, nebeneinander angeordneten und Maßstabinkremente bildenden Dauermagneten besteht.

Bei Meßsystemen nach dem Oberbegriff des Patentanspruches ist die Maßstabverkörperung bisher auf einem eigenen, aus Glas oder Metall gefertigtem Trägerkörper angebracht, wobei bevorzugt ein Trägerkörper aus isolierendem Material Verwendung findet. Für eine induktive Abtastung kann der Maßstab in Form eines Mäanders aus einem elektrischen Leiter angebracht sein, wobei der Mäander über die Meßstrecke reicht und die Mäanderschenkel eine Meßteilung bilden. Bei einem bekannten Meßsystem mit induktiver Abtastung nach der US-A 3 090 934, dem sogenannten "Inductosyn" wird an den Mäander, den man auch als Wicklung auffassen kann, eine Wechselspannung hoher Frequenz angelegt, so daß durch den Mäander ein entsprechender Wechselstrom fließt. Dadurch baut sich zwischen den Wicklungswindungen (Mäanderschenkeln) ein zeitlich pulsierendes Magnetfeld auf. Als Abtasteinheit werden zwei auf einem Gleiter vorgesehene Windungsabschnitte verwendet, die gemeinsam relativ zur Meßteilung verstellbar und gegeneinander um Bruchteile der Windungsteilung der Hauptwicklung versetzt bzw. nach einer anderen Variante gegeneinander verdreht angebracht sind. Durch das pulsierende Magnetfeld werden in diesen Windungsabschnitten der Abtasteinheit gegeneinander phasenverschobene Spannungen induziert. Bei der Relativverstellung des Gleiters gegenüber dem Maßstab erhält man beispielsweise sinusförmige Meßsignale, deren Anzahl dem Verstellweg entspricht und die durch Zählung und Interpolation zu einem Meßresultat ausgewertet werden können. Es gibt auch Meßsysteme mit induktiver Abtastung, bei denen die Windungsabschnitte im Gleiter mit dann gegebenenfalls gegeneinander phasenverschobenen Spannungen beaufschlagt und an der Maßstabverkörperung ein Abgriff vorgenommen wird. Dabei geht man davon aus, daß in der Skala eine resultierende sinusförmige Wechselspannung induziert wird, die über die Teilungslänge nach Betrag und Phase eindeutig ist, d. h., daß innerhalb der Teilungslänge jedem Ortspunkt ein einziger Spannungsvektor zugeordnet ist, der als Analogwert vom Meßgerät der Positionsanzeige aufgenommen und dann digitalisiert werden kann.

Bei Meßsystemen mit nach kapazitiven Abtastprinzipien abtastbarer Maßstabverkörperung besteht diese Verkörperung im einfachsten Fall aus quer zur Abtastrichtung parallel angeordneten Leiterstreifen, wobei die Abtasteinrichtung wieder wenigstens zwei gegeneinander um Teilungsbruchteile versetzte Abtastgruppen aufweist, die ebenfalls Kondensatorfelder bilden. Die Kapazität hängt vom jeweiligen Überdeckungsgrad der Abtastgruppen mit den Leiterstreifen der Meßteilung ab und folgt bei der Verstellung im wesentlichen einer Sinusfunktion, so daß bei dieser Verstellung wieder sinusförmige Abtastsignale erzeugt werden, deren Wellenlänge der Maßstabteilung proportional ist. Durch Mehrfachauswertung oder Interpolationsberechnung kann auch hier eine elektronische Unterteilung des Grundmaßstabes vorgenommen werden. Entsprechende Meßsysteme sind sowohl als Linearmeßsysteme als auch als Winkelmeßsysteme (Drehgeber) bekannt.

Bei allen bekannten Systemen ist es üblich, die gesondert herzustellende Maßstabverkörperung innerhalb eines für sich an der jeweiligen Werkzeugmaschine zu montierenden Schutzgehäuses anzubringen oder zumindest durch eine die Maßstabverkörperung überdeckende Schutzfolie zu schützen und die Abtasteinheit mit dem verstellbaren Teil der Werkzeugmaschine, dessen Verstellung zu messen ist, zu kuppeln. Es ist dabei eine exakte Ausrichtung notwendig, damit die Meßrichtung mit der tatsächlichen Verstellrichtung des beweglichen Teiles übereinstimmt. Die Anbringung der Maßstabverkörperung und der Abtasteinheiten erfordert entsprechende konstruktive Maßnahmen an der Werkzeugmaschine. Bei rauhem Betrieb besteht immer die Gefahr, daß die Maßstabverkörperung beschädigt oder verbogen wird.

Bei Werkzeugmaschinen geht man immer mehr dazu über, die Schlitten- und Werkzeugführungen mit einem Gleitbelag aus verschleißfestem, gute Gleiteigenschaften aufweisendem Kunststoff zu versehen. Die entsprechenden Stützflächen des Maschinenbettes brauchen dann nicht mehr hochgenau bearbeitet und gegebenenfalls sogar poliert zu sein. Es genügt eine gröbere Oberflächenstruktur der ohnehin durch den Gleitbelag abgedeckten Metalloberflächen.

Aufgabe der Erfindung ist die Schaffung eines Meßsystems nach dem Oberbegriff des Patentanspruches 1, bei dem Anbringung und Schutz der Maßstabverkörperung mit einfachen Mitteln gewährleistet sind.

Die gestellte Aufgabe wird durch die im Patentanspruch angegebene Merkmalskombination gelöst.

Der Gleitbelag erfüllt also eine Zusatzfunktion, wobei der bisherige Aufwand für die gesonderte Montage der Maßstabverkörperung entfällt. Die Maßstabverkörperung wird in einem bei der Werkzeugmaschine ohnehin benötigtem Teil untergebracht bzw. von diesem Teil geschützt und folgt in ihrem Verlauf zwangsweise und eindeutig der vorgesehenen Verstellrichtung. Die Abtasteinheit kann in eine Vertiefung des verstellbaren Teiles geschützt eingesetzt oder mit diesem verstellbaren Teil in einfacher Weise gekuppelt werden.

In der Zeichnung ist der Erfindungsgegenstand beispielsweise veranschaulicht. Es zeigt

Fig. 1 einen Teilschnitt durch eine einfache Schlittenführung einer Werkzeugmaschine und

Fig. 2 zur näheren Erläuterung ein Schema einer induktiv abtastbaren Maßstabverkörperung mit neben der Maßstabverkörperung gezeigter, beim Betrieb aber über die Maßstabverkörperung geführter Abtasteinheit.

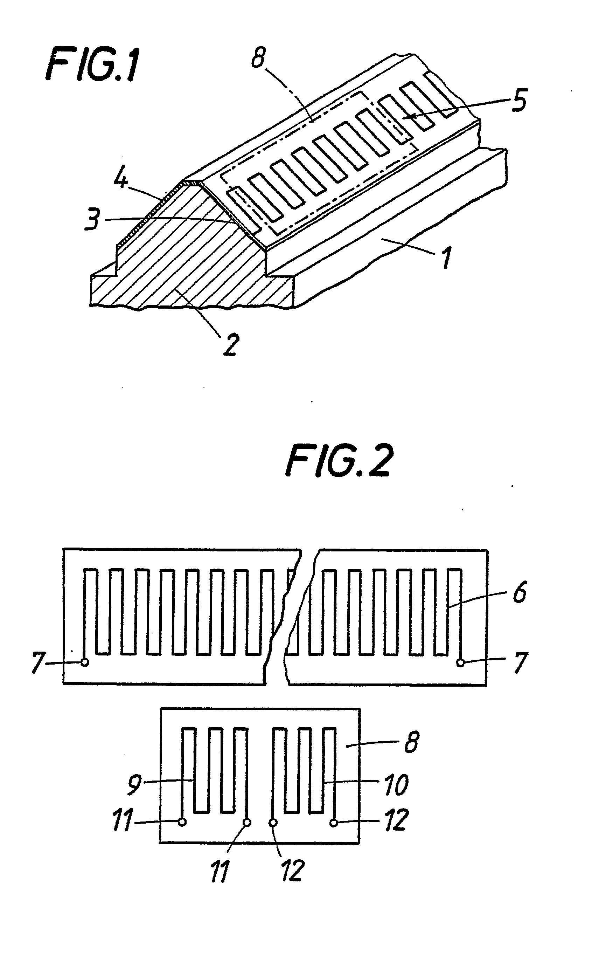

Das Bett 1 einer Werkzeugmaschine trägt beim Ausführungsbeispiel eine hochstehende Führungsrippe 2 mit abgeschrägten Flächen 3 zur Führung eines Schlittens der Werkzeugmaschine. Die Flächen 3 sind mit einem Gleitbelag 4 aus Kunststoff, beispielsweise dem unter der Markenbezeichnung "Teflon" bekannten Kunststoff, versehen. In den Belag 4 eingebettet oder an der Unterseite des Belages angebracht ist eine Maßstabverkörperung 5 vorgesehen, die nur über einen kleinen Bruchteil der Führungsbreite des Gleitbelages reicht, sich aber über die ganze Länge erstreckt. Diese Maßstabverkörperung kann gemäß Fig. 2 als leitender Mäander 6 ausgebildet sein, bei dem die einzelnen Windungen den Teilungsschritt bestimmen und der an den Enden Anschlüsse 7 aufweist.

Eine in Fig. 1 nur in ihren Umrissen angedeutete Abtasteinheit 8 kann mit dem in Fig. 1 nicht dargestellten Schlitten verstellbar sein und ist beispielsweise in eine Ausnehmung dieses Schlittens eingebettet. Die Abtasteinheit 8 wird in Längsrichtung über die Teilung 6 geführt. Nach Fig. 2 enthält die Abtasteinheit 8 zwei gegeneinander um Teilungsbruchteile versetzte Windungsabschnitte 9, 10. Je nach dem gewählten Betriebsprinzip wird and die Maßstabverkörperung und/oder an die Windungsabschnitte 9, 10 eine Wechselspannung angelegt und im jeweils anderen Teil ein Abgriff vorgenommen. Liegt die Wechselspannung an den Anschlüssen 7 an, dann erhält man bei der Verstellung an den Anschlüssen 11 bzw. 12 der Windungsabschnitte 9, 10 analoge Wechselspannung en, die gegeneinander phasenversetzt sind und bei denen die Wellenlänge der Teilung des Maßstabes 6 entspricht. Durch Digitalisierung, Mehrfachauswertung und Interpolationsberechnung kann zusätzlich zur Zählung der von einem gewählten oder durch eine nicht dargestellte Referenzmarke gegebenen Festpunkt an zurückgelegten Maßstabinkremente eine elektronische Unterteilung des Maßstabes und damit eine höhere Auflösung als durch den Maßstab selbst erzielt und in dieser höheren Auflösung das Meßergebnis angezeigt werden.

Statt einer nach induktiven Abtastprinzipien abtastbaren Maßstabverkörperung können auch nach kapazitiven Abtastprinzipien oder nach elektrostatischen Abtastprinzipien abtastbare Maßstabverkörperung bzw. nach diesen Prinzipien arbeitende Abtasteinheiten verwendet werden.

## Patentansprüche

1. Längenmeßsystem für eine Schlitten- oder Werkzeugführung (2, 3) aufweisende Werkzeugmaschinen mit einer mittels einer längsverstellbaren Abtasteinheit (8) nach induktiven oder kapazitiven Abtastprinzipien abtastbaren, entlang einer von der Schlitten- bzw. Werkzeugführung (2, 3) bestimmten Meßstrecke vorgesehenen Maßstabverkörperung (5, 6), die auf einem Träger (1) abgestützt und von einer Schutzschicht (4) abgedeckt ist, gekennzeichnet durch die Kombination folgender Merkmale:

  1. Die Schlitten- oder Werkzeugführung (2, 3) besitzt einen aus Kunststoff gefertigten Gleitbelag (4) und

  2. die Maßstabverkörperung (5, 6) ist als Teil der Schlitten- bzw. Werkzeugführung (2, 3) in dem zugleich ihre Schutzschicht bildenden Gleitbelag (4) eingebettet oder unterseitig an diesem angebracht.

## Claims

1. A length measuring system for a machine tool having a sliding carriage or tool guide (2, 3), having measuring scale (5, 6) adapted to be scanned according to inductive or capacitive scanning principles by means of a longitudinally adjustable scanning unit (8) provided along a measuring section determined by the sliding carriage or tool guide (2, 3), which measuring scale is supported on a carrier (1) and is covered by a protective layer (4), characterised by the combination of the following points:

  1. the sliding carriage or tool guide (2, 3) has a slideway lining (4) of plastics material, and

  2. the measuring scale (5, 6) is embedded in the slideway lining (4) which also forms the protective layer, or is attached thereto on the underside thereof, as part of the sliding carriage or tool guide (2, 3).

## Revendications

1. Système de mesure pour une machine-outil ayant une glissière (2, 3) de chariot ou d'outil, comprenant une représentation (5, 6) d'une règle divisée prévue le long d'une distance de mesure déterminée par la glissière (2, 3) de chariot ou d'outil et balayable suivant des principes de balayage inductifs ou capacitifs au moyen d'une unité de lecture (8) mobile en direction longitudinale, ladite représentation de la règle divisée étant supportée par un support (1) et recouvert d'une couche protectrice (4), caractérisé par la combinaison des caractéristiques suivantes:

  1. la glissière (2, 3) de chariot ou d'outil a une couche de glissement (4) réalisée en matière synthétique et

  2. la représentation (5, 6) de la règle divisée est encastrée comme élément de la glissière (2, 3) de chariot ou d'outil dans la couche de glissement (4) formant en même temps leur couche protectrice ou est appliquée sur le côté intérieur de ladite couche de glissement.

FIG.1

FIG.2